(19) Europäisches Patentamt
European Patent Office
Office européen des brevets

(11) Veröffentlichungsnummer: **0 035 752**
**B1**

(12) # EUROPÄISCHE PATENTSCHRIFT

(45) Veröffentlichungstag der Patentschrift: **15.12.82**

(51) Int. Cl.³: **C 07 C125/06**, B 01 J 23/89, B 01 J 31/30

(21) Anmeldenummer: **81101574.2**

(22) Anmeldetag: **05.03.81**

(54) **Verfahren zur Herstellung von Urethanen.**

(30) Priorität: **12.03.80 DE 3009489**

(43) Veröffentlichungstag der Anmeldung: **16.09.81 (Patentblatt 81/37)**

(45) Bekanntmachung des Hinweises auf die Patenterteilung: **15.12.82 Patentblatt 82/50**

(84) Benannte Vertragsstaaten: **AT BE CH DE FR GB IT LI NL SE**

(56) Entgegenhaltungen:
**DE A 1 568 825**
**DE A 1 568 851**
**DE A 1 568 893**

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Becker, Robert, Dr.**
**Fichtestrasse 2a**
**D-5090 Leverkusen 1 (DE)**
Erfinder: **Rasp, Christian, Dr.**
**Wolfskaul 10**
**D-5000 Koeln 80 (DE)**
Erfinder: **Stammann, Günter, Dr.**
**Silesiusstrasse 78**
**D-5000 Koeln 80 (DE)**
Erfinder: **Grolig, Johann, Dr.**
**Heinrich-Lübke-Strasse 22**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 035 752 B1

Jouve, 18, rue St-Denis, 75001 Paris, France

# Verfahren zur Herstellung von Urethanen

Die vorliegende Erfindung betrifft ein verbessertes Verfahren zur Herstellung von Urethanen (Carbamidsäureestern) durch Umsetzung organischer Nitroverbindungen mit Kohlenmonoxid und mindestens eine Hydroxygruppe enthaltenden organischen Verbindungen in Gegenwart eines Edelmetalls und/oder einer Edelmetallverbindung der 8. Nebengruppe des Periodensystems der Elemente und eines bestimmten, nachstehend näher beschriebenen Kokatalysators.

Organische Isocyanate werden großtechnisch im allegemeinen durch Umsetzung der entsprechenden Amine mit Phosgen hergestellt. Seit geraumer Zeit ist man bestrebt, einen großtechnisch gangbaren Weg zu organischen Isocyanaten aufzufinden, bei welchem sich die Verwendung des Phosgens erübrigt. Ein derartiger Syntheseweg besteht in der Umsetzung von organischen Nitroverbindungen mit Kohlenmonoxid und organischen Hydroxylverbindungen zu den entsprechenden urethanen und deren anschließende Spaltung in Isocyanat und Hydroxylgruppen aufweisende Verbindungen, wobei vor der Spaltung auch eine Modifizierung des als Zwischenprodukt erhaltenen Urethans denkbar ist. So ist es beispielsweise möglich, das aus Nitrobenzol, Kohlenmonoxid und Ethanol zugängliche Phenylurethan zunächst mit Formaldehyd zum Bisurethan des 4,4'-Diisocyanatodiphenylmethans umzusetzen, um das so erhaltene Zwischenprodukt unter Abspaltung des Ethanols in 4,4'-Diisocyanatodiphenylmethan zu überführen.

Die Spaltung von Urethanen in die entsprechenden Isocyanate und Hydroxylgruppen aufweisenden Verbindungen ist beispielsweise in der DE-OS 2 421 503 bzw. in den in dieser Literaturstelle abgehandelten Vorveröffentlichungen beschrieben.

Für die Herstellung der Urethane sind in der Patentliteratur im wesentlichen zwei Katalysatortypen beschrieben. So wird beispielsweise in den DE-OSen 2 343 826, 2 614 101 und 2 623 694 die Umsetzung von organischen Nitroverbindungen mit Kohlenmonoxid und Alkoholen zu Urethanen in Gegenwart von Selen oder Selenverbindungen beschrieben. Man erhält dabei sowohl mit Mono- als auch mit Dinitroverbindungen gute Urethan-Ausbeuten. Die Selenverbindungen, insbesondere die während der Reaktion intermediär entstehenden Organoselenverbindungen und Selenwasserstoff, sind außerordentlich giftig und müssen bei der Aufarbeitung quantitativ, z.B. durch chemische Reaktion, entfernt werden, wodurch eine aufwendige chemische Aufarbeitungsstufe resultiert, welche die Wirtschaftlichkeit des Verfahrens in Frage stellt.

In den DE-OSen 1 568 044 und 2 603 574 werden als Katalysatoren Edelmetalle, insbesondere Palladium, in Gegenwart von Lewissäuren beschrieben. Als besonders wirksame Lewissäure wird wasserfreies Eisen (III)-chlorid angegeben. Man erhält mit diesen Katalysatoren zwar gute Urethan-Ausbeuten, bezogen auf die eingesetzte Nitroverbindung. In Bezug auf die eingesetzte Hydroxyverbindung sind die Ausbeuten jedoch unbefriedigend. So erhält man bei Verwendung von Ethanol als Hydroxykomponente hohe Anteile von Diethylether, dessen Bildung durch die sauren Eigenschaften der Lewissäure verursacht wird. Gleichzeitig beobachtet man bei der Anwendung dieser Edelmetall/Lewissäure-Katalysatoren Korrosion der als Reaktionsbehälter eingesetzten Edelstahlautoklaven. Durch Zusatz organischer Basen, wie beispielsweise Pyridin (DE-OS 2 603 574) kann die Korrosion etwas zurückgedrängt werden, was sich jedoch im Langzeitversuch als nicht ausreichend erweist. Ein weiterer Nachteil dieser Katalysatorsysteme liegt in ihrer schlechten Rückfürbarkeit, da die angewandten Lewissäuren in Gegenwart der eingesetzten Hydroxyverbindungen nicht ausreichend stabil sind.

Diese Nachteile der Verfahren des Standes der Technik werden durch die Verfahren der deutschen Patentanmeldungen P 28 19 826.7 und P 29 03 950.7 ausgeräumt, jedoch sind diese letztgenannten Verfahren, bei denen Eisenoxichlorid bzw. Eisenoxide und/oder Eisenoxidhydrate in Kombination mit Chloride enthaltenden Verbindungen als Kokatalysator verwendet werden, mit dem Nachteil behaftet, daß mit den dort beschriebenen Katalysator-Systemen die Forderungen der Praxis nach grossen Reaktionsgeschwindigkeiten bei gleichzeitig minimaler Korrosion noch nicht in vollem Umfange erfüllt werden können.

Es wurde nun überraschend gefunden, daß die reaktionsbeschleunigende Wirkung und/oder die Unterdrückung von Korrosion der Reaktoren bei den in den beiden letztgenannten deutschen Patentanmeldungen beschriebenen Katalysator-Systemen ganz beträchtlich verbessert werden kann, wenn als zusätzliche Kokatalysator-Komponente metallisches Eisen in fein verteilter Form mitverwendet wird. Gleichzeitig zeigt es sich, daß bei der Mitverwendung von derartigem feinverteilten Eisen anstelle der in der deutschen Patentanmeldung 29 03 950.7 beschriebenen Eisenoxide und/oder Eisenoxidhydrate auch andere Oxide bzw. Oxidhydrate insbesondere solche auf Basis der vierwertigen Zinns, dreiwertigen Chroms, sechswertigen Molybdäns, sechswertigen Wolframs oder fünfwertigen Vanadins eingesetzt werden können, wobei besonders das Oxid des dreiwertigen Chroms gute Ergebnisse liefert.

Gegenstand der vorliegenden Erfindung ist somit ein Verfahren zur Herstellung von Urethanen durch Umsetzung organischer Nitroverbindungen mit Kohlenmonoxid und mindestens eine Hydroxygruppe enthaltenden organischen Verbindungen in der flüssigen Phase bei erhöhter Temperatur und erhöhtem Druck in Gegenwart von Elementen und/oder Elementverbindungen aus der Gruppe der Edelmetalle der 8. Nebengruppe des Periodensystems und einem Kokatalysator, dadurch gekennzeichnet, daß man als Kokatalysator sowohl

a) eine Chloride enthaltende Komponente, welche aus

aa) Eisenoxichlorid oder einem Eisenoxichlorid enthaltenden Gemisch von Eisenverbindungen und/oder

ab) Kombination von (i) Oxiden und/oder Oxidhydraten des vierwertigen Zinns, dreiwertigen Chroms, sechswertigen Molybdäns, sechswertigen Wolframs, fünfwertigen Vanadins und/oder zwei- und/oder dreiwertigen Eisens mit (ii) anionisch, als Chlorid gebundenes Chlor enthaltenden Verbindungen von Elementen der 3. bis 5 Hauptgruppe oder 1. bis 8. Nebengruppe des Periodensystems der Elemente, welche mit den Verbindungen der Edelmetalle der 8. Nebengruppe, die als wesentliche Katalysatorkomponente eingesetzt werden, nicht identisch sind, und/oder Hydrochloriden tertiärer Amine besteht, als auch

b) metallisches Eisen oder dessen Legierungen in fein verteilter bzw. oberflächenreicher Form einsetzt.

Für das erfindungsgemäße Verfahren geeignete Kokatalysator-Komponenten aa) sind Eisenoxichlorid bzw. Eisenoxichlorid enthaltende Gemische, deren Herstellung auf verschiedene Weise erfolgen kann. So wird Eisenoxichlorid erhalten, wen man beispielsweise Eisen (III)-oxid mit trockenem Chlorwasserstoff bei Temperaturen von 230-290 °C behandelt (Z. anorgan. Chemie, Bd. 260, 292 (1949)) wobei die Reaktion nach folgender Gleichung verläuft :

$$Fe_2O_3 + 2\,HCl = 2\,FeOCl + H_2O.$$

Anstelle von Chlorwasserstoff können auch Chlorwasserstoff abspaltende Verbindungen, z.B. die Salze tertiärer Amine, wie beispielsweise Pyridiniumchlorid, eingesetzt werden.

Eine weitere Darstellungsmethode (Bull. Soc. franc. Mineral. 58,6 (1935)) besteht in der Umsetzung von Eisen (III)-oxid mit Eisen (III)-chlorid bei erhöhter Temperatur nach folgender Reaktionsgleichung :

$$Fe_2O_3 + FeCl_3 = 3\,FeOCl.$$

Weiterhin erhält man Eisenoxychlorid durch Hydrolyse von Eisen (III)-chlorid in der Gasphase (Gmelins Handb. 8, Aufl. Eisen, Teil B, 318-319) oder in der flüssigen Phase beim Erhitzen auf 270-330 °C im Bombenrohr (N. Jahrb. Min. Beilagebd. 52, 334 (1925)), wobei folgende Reaktionsgleichung angenommen wird :

$$FeCl_3 + H_2O = FeOCl + 2\,HCl.$$

Eine besonders vorteilhafte Darstellungsmethode ist die thermische Zersetzung von Eisenchloridhydraten im Temperaturbereich von 150 °C bis 300 °C bei Normaldruck (vgl. : Z. anorgan. Chemie, Bd. 260, 286 (1949)), die beispielsweise durch folgende Reaktionsgleichung formuliert werden kann :

$$FeCl_3 \cdot xH_2O = FeOCl + 2\,HCl + (x - 1)H_2O.$$

Je nach Temperatur der Eisenoxychlorid-Herstellung können die Präparate geringe bis größere Mengen von Zersetzungsprodukten enthalten, die die Aktivität des Eisenoxychlorids bei der Urethan-Synthese, insbesondere bei wiederholter Rückführung des Katalysatorsystems, verringern können. Das Eisenoxychlorid muß beim erfindungsgemäßen Verfahren nicht in chemisch reiner Form eingesetzt werden. Es ist durchaus möglich, die bei der technischen Herstellung des Eisenoxychlorids anfallenden Gemische von Eisenoxychlorid mit anderen nicht identifizierten Eisenverbindungen, insbesondere Eisenoxiden, einzusetzen. Bei den in diesen Gemischen neben dem Einzenoxychlorid vorliegenden Verbindungen handelt es sich um katalytisch weitgehend inerte Substanzen, deren Natur für die Durchführbarkeit des erfindungsgemäßen Verfahrens weitgehend ohne Bedeutung ist. Falls auf den Einsatz von reinem Eisenoxychlorid verzichtet wird, können auch Gemische eingesetzt werden, welche mindestens 10, vorzugsweise mindestens 50 Gew.-% an Eisenoxichlorid enthalten.

Anstelle oder zusammen mit diesen Kokatalysator-Komponenten aa) werden beim erfindungsgemäßen Verfahren bevorzugt die obengenannten Kombinationen ab) von Oxiden (i) mit Chloriden (ii) eingesetzt, da insbesondere im Falle dieser Kombinationen ab) die reaktionsbeschleunigende Wirkung des Eisens (Komponente b)) in Erscheinung tritt.

Geeignete Kokatalysator-Komponenten (i) sind z.B.

Oxide oder Oxidhydrate des vierwertigen Zinns wie $SnO_2$ oder $SnO_2xH_2O$ (mit wechselndem Wassergehalt),

Oxide oder Oxidhydrate des dreiwertigen Chroms wie $Cr_2O_3$, $Cr_2O_3xH_2O$ (mit unterschiedlichem Wassergehalt), CrO(OH),

Oxide oder Oxidhydrate des sechswertigen Molybdäns wie $MoO_3$, $MoO_3 \cdot xH_2O$ (x = 1,2)

Oxide oder Oxidhydrate des sechswertigen Wolframs wie $WO_3$, $WO_3 \cdot xH_2O$ (x = 1,2)

Oxide oder Oxidhydrate des fünfwertigen Vanadins wie $V_2O_5$, $V_2O_5$—$H_2O$-Absorbate,

und/oder vorzugsweise Oxide oder Oxidhydrate des zwei- und dreiwertigen Eisens in reiner Form oder als Gemisch wie beispielsweise Eisen (II)-oxid, Eisen (II)-hydroxid, Eisen (III)-hydroxid, $\alpha$-$Fe_2O_3$, $\gamma$-

$Fe_2O_3$, $Fe_3O_4$, α-FeO—OH, β-FeO—OH, γ-FeO—OH. Bevorzugt sind die Oxide bzw. Oxid-Hydrate des dreiwertigen Chroms und besonders bevorzugt die Oxide und Oxidhydrate des dreiwertigen Eisens.

Die Kokatalysator-Komponenten (i) werden stets in Kombination mit anionisch als Chlorid gebundenes Chlor enthaltenden Verbindungen von Elementen der dritten bis fünften Hauptgruppe oder der ersten bis achten Nebengruppe des Periodensystems der Elemente, welche mit den Verbindungen der Edelmetalle der 8. Nebengruppe, die als wesentliche Katalysatorkomponente eingesetzt werden, nicht identisch sind, und die gegebenenfalls auch als Komplexsalze vorliegenden können, und/oder Hydrochloriden von tertiären organischen Aminen eingesetzt.

Beispiele derartiger Verbindungen (ii) sind $AlCl_3$, $SnCl_2 \cdot 2H_2O$, $SbCl_3$, $CuCl_2$, $ZnCl_2$, $CeCl_3$, $TiOCl_2$, $VCl_3$, $CrCl_3$, $FeCl_2 \cdot nH_2O$ (n = 0, 1, 2, 4, 6), α- und β-$Fe_2(OH)_3Cl$, $FeCl_2 \cdot$ n Pyridin (n = 2/3, 1, 2, 4), $FeCl_2 \cdot$ n Picolin (n = 1, 4) u.ä. Komplexverbindungen.

Als Hydrochloride tertiärer Amine eignen sich insbesondere Hydrochloride von bliebigen unter den Reaktionsbedingungen inerten tertiären Aminen des Molekulargewichts 59-10 000, vorzugsweise 59-300. Es sind sowohl Hydrochloride aliphatischer als auch cycloaliphatischer, aromatischer araliphatischer oder heterocyclischer tert. Amine geeignet. Ebenfalls geeignet sind Hydrochloride von tert. Aminen, welche unter den Reaktionsbedingungen inerte Substituenten, wie beispielsweise Halogen-, Alkenyl-, Cyano-, Aldehyd-, Alkoxy-, Phenoxy-, Thioalkoxy-, Thiophenoxy-, Carbamyl-, Carboalkoxy- und/oder Thiocarbamyl-Substituenten aufweisen. Beispiele geeigneter tertiärer Amine sind Trimethylamin,Triethylamin, Tripropylamin, Tributylamin, cycloaliphatische tertiäre Amine, wie N,N-Dimethylcyclohexylamin, N,N-Diethylcyclohexylamin, 1,4-Diazabicyclo(2,2,2)octan, aromatische tertiäre Amine wie N,N-Dimethylanilin, N,N-Diethylanilin, sowie heteroaromatische tertiäre Amine wie Pyridin, Chinolin, Isochinolin, Chinaldin, Lepidin, pyrolysiertes Polyacrylnitril oder Polyvinylpyridin.

Zu den bevorzugten Kokatalysator-Komponenten (ii) gehören Chlorid-haltige Verbindungen des zweiwertigen Eisens der beispielhaft genannten Art.

Die Kokatalysatorkomponente aa) wird beim erfindungsgemäßen Verfahren, falls sie nicht durch die Komponente ab) ersetzt wird, in einer Menge von 0,1 bis 20 Gew.%, vorzugsweise 1 bis 5 Gew.-%, bezogen auf die Gesamtmenge des Reaktionsgemischs inklusive gegebenenfalls mitverwendetem Lösungsmittel eingesetzt. Die Kokatalysatorkomponente ab) wird beim erfindungsgemäßen Verfahren, falls sie nicht völlig durch die Komponente aa) ersetzt wird, in entsprechenden Mengen eingesetzt, d.h. es kommen 0,1 bis 20 Gew.-%, vorzugsweise 1 bis 5 Gew.-%, bezogen auf das Reaktionsgemisch inklusive gegebenenfalls mitverwendetem Lösungsmittel der Komponente (i) zum Einsatz. Die Komponente (ii) wird dann in Konzentrationen von 0,05 bis 10 Gew.-%, insbesondere von 0,1 bis 5 Gew.-%, bezogen auf Reaktionsgemisch inklusive gegebenenfalls mitverwendetem Lösungsmittel mitverwendet. Im allgemeinen wird die Menge der Komponente (ii) so bemessen, daß auf jedes Mol an in der Komponente (i) chemisch gebundenem Metall mindestens 0,001 Mol, vorzugsweise mindestens 0,01 insbesondere mindestens 0,1 Mol, an in der Komponente (ii) gebundenen Chloridionen entfallen. Bei der gleichzeitigen Verwendung von Kokatalysator-Komponenten aa) und ab) können die Mengen der einzelnen Komponenten selbstverständlich so reduziert werden, daß im Reaktionsgemisch inklusive dem gegebenenfalls verwendeten Lösungsmittel insgesamt 0,1 bis 20 Gew.-%, vorzugsweise 1 bis 5 Gew.-% der Komponenten aa) und (i) vorliegen.

Bei der erfindungswesentlichen Kokatalysator-Komponente b) handelt es sich um legiertes (beispielsweise Stahl) oder unlegiertes metallisches Eisen, welches in fein verteilter, d.h. oberflächenreicher Form beispielsweise als Pulver, Späne oder Schwamm zum Einsatz gelangt. Bevorzugt wird Eisenpulver einer mittleren Korngröße von 0,001 bis 0,1 mm eingesetzt. Die Kokatalysator-Komponente b) wird in einer Menge von 0,05 bis 10 Gew.-%, insbesondere 0,1 bis 2 Gew.-%, bezogen auf Reaktionsgemisch, inklusive gegebenenfalls mitverwendetem Lösungsmittel, eingesetzt.

Da die Rückgewinnung der Kokatalysator-Komponente b) jedoch keinerlei größere Schwierigkeiten bereitet, können auch größere Mengen dieser Komponente eingesetzt werden.

Die bevorzugten erfindungsgemäßen Kokatalysator-Systeme bestehen aus Eisenpulver, Eisenoxiden und Eisen (II)-chlorid-Verbindungen der oben beispielhaft genannten Art.

Die wesentliche Katalysator-Komponente sind Edelmetalle ausgewählt aus der Gruppe der Edelmetalle der 8. Nebengruppe des Periodensystems der Elemente (Ruthenium, Rhodium, Palladium, Osmium, Iridium, Platin), sowie Salze bzw. Komplexverbindungen dieser Elemente der nachstehend beispielhaft genannten Art. Die Verwendung dieser Salze bzw. Komplexe ist gegenüber der Verwendung der elementaren Metalle bevorzugt. Besonders bevorzugt werden solche Salze bzw. Komplexe der genannten Edelmetalle verwendet, die im Reaktionsgemisch löslich sind. Auch die Mitverwendung eines inerten Trägers, beispielsweise eines Aluminiumoxid-Trägers für die Metalle bzw. Metallverbindungen ist denkbar. Geeignete Salze bzw. Komplexverbindungen der genannten Metalle sind beispielsweise deren Chloride, Bromide, Jodide, Natriumtetrachloro-, Kaliumtetrachloro-, Natriumtetrabromo-, Natriumtetrajodo-, Kaliumtetrajodo-Komplexe, deren Acetate oder Acetylacetonate. Besonders bevorzugt wird Palladiumchlorid eingesetzt. Die genannten Edelmetalle bzw. Edelmetallverbindungen werden bevorzugt in einer Menge von 0,000 1 bis 0,1 Gew.-%, insbesonders 0,000 2 bis 0,01 Gew.-%, berechnet als elementares Metall und bezogen auf das Reaktionsgemisch, inklusive gegebenenfalls mitverwendetem Lösungsmittel eingesetzt. Bei niedrigeren Konzentrationen fällt die Reaktionsgeschwindigkeit zu stark ab. Höhere Konzentrationen sind zwar möglich, jedoch wegen der möglichen Edelmetallverluste unwirtschaftlich,

zumal eine weitere Steigerung der Urethanausbeuten nicht mehr erfolgt. Es ist gerade einer der wesentlichen Vorteile des erfindungsgemäßen Verfahrens, daß es die Herstellung der Urethane in ausgezeichneten Ausbeuten bei gleichzeitiger Verwendung von nur äußerst geringen Mengen an Edelmetall-Katalysatoren gestattet.

Gemäß einer besonderen Ausführungsform des erfindungsgemäßen Verfahrens werden als weitere Kokatalysatoren-Komponente Basen, vorzugsweise tertiäre Amine, mitverwendet. Diese Mitverwendung von tertiären Aminen erhöht die Selektivität bezüglich möglicher unerwünschter Nebenreaktionen der als Reaktionspartner eingesetzten organischen Hydroxy-Verbindungen.

Geeignete organische Basen sind insbesondere beliebige, unter den Reaktionsbedingungen inerte tert. Amine des Molekulargewichtsbereiches 59-10 000, vorzugsweise 59-300. Sowohl aliphatische als auch cycloaliphatische, aromatische, araliphatische oder heterocyclische tert. Amine sind geeignet. Ebenfalls geeignet sind derartige tert. Amine, welche unter den Reaktionsbedingungen inerte Substituenten, wie beispielsweise Halogen-, Alkenyl-, Cyano-, Aldehyd, Alkoxy-, Phenoxy-, Thioalkoxy-, Thiophenoxy-, Carbamyl-, Carboalkoxy- und/oder Thiocarbamyl- Substituenten aufweisen. Beispiele geeigneter tertiärer Amine sind Trimethylamin, Triethylamin, Tripropylamin, Tributylamin, cycloaliphatische tertiäre Amine, wie N,N-Dimethylcyclohexylamin, N,N-Diethylcyclohexylamin, 1,4-Diazabicyclo(2,2,2)octan ; aromatische tertiäre Amine wie N,N-Dimethylanilin, N,N-Diethylanilin, sowie heteroaromatische tertiäre Amine, wie Pyridin, Chinolin, Isochinolin, Chinaldin, Lepidin, pyrolysiertes Polyacrylnitril oder Polyvinylpyridin.

Die tertiären Amine können in Konzentrationen von 0,01 bis 10 Gew.-%, insbesondere 0,1 bis 5 Gew.-%, bezogen auf das Reaktionsgemisch inklusive gegebenenfalls mitverwendetem Lösungsmittel, zugesetzt werden.

Ausgangsverbindungen für das erfindungsgemäße Verfahren sind beliebige organische Nitroverbindungen, d.h. beliebige Nitrogruppen aufweisende, ansonsten unter den Bedingungen des erfindungsgemäßen Verfahrens inerte organische Verbindungen mit mindestens einer aliphatisch, cycloaliphatisch und/oder aromatisch gebundenen Nitrogruppe, eines im allgemeinen zwischen 61 und 400, vorzugsweise 123 und 262 liegenden Molekulargewichts, sowie beliebige, mindestens eine Hydroxygruppe enthaltende organische Verbindungen, beispielsweise substituierte oder unsubstituierte, aliphatische, cycloaliphatische und/oder aromatische Mono- oder Polyhydroxyverbindungen, eines im allgemeinen zwischen 32 und 228, vorzugsweise 32 und 102 liegenden Molekulargewichts.

Beispielsweise können folgende aromatische Nitroverbindungen eingesetzt werden : Nitrobenzol, o-Dinitrobenzol, m-Dinitrobenzol, p-Dinitrobenzol, o-Chlornitrobenzol, m-Chlor-nitrobenzol, o-Chlor-nitrobenzol, o-Nitrotoluol, m-Nitrotoluol, p-Nitrotoluol, 2,3-Dinitrotoluol, 2,4-Dinitrotoluol, 2,5-Dinitrotoluol, 2,6-Dinitrotoluol, 3,4-Dinitrotoluol, 3-Nitro-o-xylol, 4-Nitro-o-xylol, 2-Nitro-m-xylol, 4-Nitro-m-xylol, 5-Nitro-m-xylol, Nitro-p-xylol, 3,4-Dinitro-o-xylol, 3,5-Dinitro-o-xylol, 3,6-Dinitro-o-xylol, 4,5-Dinitro-o-xylol, 2,4-Dinitro-m-xylol, 2,5-Dinitro-m-xylol, 4,5-Dinitro-m-xylol, 4,6-Dinitro-m-xylol, 2,3-Dinitro-p-xylol, 2,6-Dinitro-p-xylol, 1-Nitronaphthalin, 2-Nitronaphthalin, Dinitronaphthaline, Nitroanthracene, Nitrodiphenyle, Bis-(nitrophenyl)-methane, Bis-(nitrophenyl)-thioether, Bis-(nitrophenyl)-sulfone, Nitrodiphenoxyalkane, Nitrophenothiazine.

Als cycloaliphatische Nitroverbindungen seien genannt : Nitrocyclobutan, Nitrocyclopentan, Nitrocyclohexan, 1,2-Dinitrocyclohexan, 1,3-Dinitrocyclohexan, 1,4-Dinitrocyclohexan, Bis-(nitrocyclohexyl)-methane.

Beispielhaft für die Gruppe der Nitroalkane seien genannt : Nitromethan, Nitroethan, 1-Nitropropan, 2-Nitropropan, Nitrobutane, Nitropentane, Nitrohexane, Nitrodecane, Nitrocetane, 1,2-Dinitroethan, 1,2-Dinitropropan, 1,3-Dinitropropan, Dinitrobutane, Dinitropentane, Dinitrohexane, Dinitrodecane, Phenylnitromethan, Bis-(nitromethyl)-cyclohexane, Bis-(nitromethyl)-benzole, ω-Nitrocarbonsäurenitrile.

Besonders bevorzugte Nitroverbindungen für das erfindungsgemäße Verfahren sind aromatische Nitroverbindungen wie insbesondere Nitrobenzol, 1,3-Dinitrobenzol, 2,4-Dinitrotoluol, 2,6-Dinitrotoluol, Dinitronaphthaline wie z.B. 1,5-Dinitronaphthalin oder 2,4'-bzw. 4,4'-Dinitrodiphenylmethan.

Zu den erfindungsgemäß geeigneten Hydroxygruppen enthaltenden organischen Verbindungen zählen einwertige Alkohole, mehrwertige Alkohole, einwertige Phenole und mehrwertige Phenole.

Die Alkohole umfassen lineare oder verzweigte Alkanole, Cycloalkanole, Alkenole, Cycloalkenole, Aralkylalkohole und ähnliches, jeder ein- oder mehrwertig. Diese Alkohole können einen Substituenten enthalten, der Sauerstoff, Stickstoff, Schwefel oder ein Halogenatom enthält, beispielsweise eine Halogen-, Sulfoxid-, Sulfon-, Amin-, Amid-, Carbonyl- oder Carbonsäureestergruppe. Beispielhaft seien folgende einwertigen Alkohole genannt : Methylalkohol, Äthylalkohol, Propanol, Isopropanol, Butanol, Pentanol, Hexanol, Cyclohexanol, Benzylalkohol. Geeignete mehrwertige Alkohole sind beispielsweise : Äthylenglykol, Diäthylenglykol, Propylenglykol, Dipropylenglykol, Glycerin, Hexantriol und ähnliche sowie höher funtionelle Polyole. Bevorzugt werden einwertige aliphatische Alkohole mit 1-6 Kohlenstoffatomen und besonders bevorzugt Äthylalkohol eingesetzt.

Zu den erfindungsgemäß geeigneten Phenolen zählen beispielsweise Phenol, Chlorphenole, Kresole, Äthylphenole, Propylphenole, Butylphenole oder höhere Alkylphenole, Brenzcatechin, Resorcin, 4,4'-Dihydroxydiphenylmethan, Bisphenol-A, Anthranol, Phenanthrol, Pyrogallol, oder Phloroglucin.

Die organischen Hydroxy-Verbindungen werden bei der Durchführung des erfindungsgemäßen Verfahrens im allgemeinen in solchen Mengen eingesetzt, daß bei Verwendung von Mononitro-

verbindungen als Ausgangsmaterial ein Äquivalentverhältnis zwischen Nitrogruppen und Hydroxylgruppen von 1 : 0,5 bis 1 : 100, vorzugsweise 1 : 1 bis 1 : 100 und bei Verwendung von Dinitroverbindungen ein Äquivalentverhältnis zwischen Nitrogruppen und Hydroxylgruppen von 1 : 1 bis 1 : 100 vorliegt.

Besonders bevorzugt werden die bevorzugten Alkohole im Überschuß eingesetzt, wobei der nicht umgesetzte Überschuß als Reaktionsmedium dient.

Das Kohlenmonoxid wird im allgemeinen in einer Menge eingesetzt, die 1 bis 30 Mol Kohlenmonoxid pro Mol an umzusetzenden Nitrogruppen entspricht, wobei im allgemeinen das Kohlenmonoxid in den vorzugsweise beim erfindungsgemäßen Verfahren eingesetzten Druckreaktor eingepreßt wird.

Die erfindungsgemäße Umsetzung kann in Gegenwart oder in Abwesenheit eines Lösungsmittels durchgeführt werden. Im allgemeinen dient die vorzugsweise im Überschuß eingesetzte organische Hydroxylverbindung als Lösungsmittel. Die Mitverwendung inerter Lösungsmittel, die bis zu 80 Gew.-% des gesamten Reaktionsansatzes ausmachen können, ist jedoch auch möglich. Die Menge des Lösungsmittels muß, gleichgültig ob es sich um im Überschuß eingesetzte Hydroxylverbindung oder um inertes Lösungsmittel handelt, so bemessen sein, daß die Reaktionswärme der exothermen Urethanbildung ohne unzulässige Temperaturerhöhung abgeführt werden kann. Im allgemeinen wird daher das erfindungsgemäße Verfahren unter Verwendung einer Konzentration an Nitroverbindungen von 5-40 Gew.-%, vorzugsweise 5-30 Gew.-%, bezogen auf das Gesamtreaktionsgemisch inklusive dem Lösungsmittel durchgeführt.

Brauchbare Lösungsmittel sind gegen die Reaktionskomponenten und das Katalysatorsystem inerte Lösungsmittel, wie beispielsweise aromatische, cycloaliphatische und aliphatische Kohlenwasserstoffe, die gegebenenfalls durch Halogen substituiert sein können, wie Benzol, Toluol, Xylol, Chlorbenzol, Dichlorbenzol, Trichlorbenzol, Chlornaphthalin, Cyclohexan, Methylcyclohexan, Chlorcyclohexan, Methylenchlorid, Tetrachlorkohlenstoff, Tetrachloräthan, Trichlor-trifluoräthan u.ä. Verbindungen.

Die Reaktionstemperatur liegt im allgemeinen zwischen 100 °C und etwa 300 °C, insbesondere zwischen 150 °C und 250 °C und besonders vorteilhaft im Bereich von 170 °C bis 200 °C. Der Druck muß so bemessen sein, daß stets das Vorliegen einer flüssigen Phase gewährleistet ist und liegt im allgemeinen im Bereich von 5 bis 500 bar, besonders vorteilhaft im Bereich von 50 bis 300 bar bei Reaktionstemperatur. Je nach eingesetzter Nitroverbindung bzw. Hydroxyverbindung beträgt die für quantitativem Umsatz benötigte Reaktionszeit zwischen wenigen Minuten und mehreren Stunden.

Die Umsetzung der Nitroverbindungen mit den Hydroxyverbindungen und Kohlenmonoxid zu Urethanen kann diskontinuierlich oder kontinuierlich durchgeführt werden.

Die diskontinuierliche Umsetzung kann im Hochdruckautoklaven durchgeführt werden. Die Verteilung der nicht gelösten Katalysatoren bzw. Kokatalysatoren kann dabei beispielsweise durch kräftiges Rühren oder durch Umpumpen des Reaktionsgemisches erfolgen. Die exotherme Reaktionswärme kann direkt durch Partialverdampfung, z.B. mittels eines Siedereaktors, oder indirekt durch Wärmeaustausch, z.B. durch intern eingebaute Kühlaggregate oder im Falle der Umpumpens auch über einen externen Wärmeaustauscher abgeführt werden. Die Aufarbeitung und Katalysatorrückführung kann je nach Löslichkeit des erzeugten Urethans im Reaktionsgemisch auf verschiedene Weise erfolgen. Bei leicht löslichen Urethanen kann beispielsweise nach beendeter Reaktion die Hauptmenge des bei tiefen Temperaturen schwerlöslichen Kokatalysatorgemisches samt dem größten Teil des adsorbierten Edelmetalls bzw. der adsorbierten Edelmetallverbindung und des gegebenenfalls eingesetzten organischen Aminsalzes vom Reaktionsprodukt beispielsweise durch Filtration oder Zentrifugieren abgetrennt und wiederverwendet werden. Das flüssige Reaktionsgemisch kann auf übliche Weise, z.B. durch fraktionierte Destillation und/oder Kristallisation in Lösungsmittel, in die reinen Urethane und gegebenenfalls kleine Mengen von Nebenprodukten aufgetrennt werden, wobei diese Trennung diskontinuierlich oder kontinuierlich erfolgen kann. Im Destillationsrückstand sind oft noch kleine Mengen der im Reaktionsgemisch gelösten Kokatalysator-Komponente und/oder Spuren des Edelmetall-Katalysators enthalten, die wieder in die Umsetzung zurückgeführt werden können.

Im Falle von im Lösungsmittel bzw. überschüssiger Hydroxyverbindung schwer löslichen Urethanen kann die Aufarbeitung des Reaktionsgemisches in abgeänderter Weise erfolgen. Beispielsweise wird nach Entspannung unter Druck und höherer Temperatur, bei welchen die Urethane noch gelöst sind, jedoch das Katalysator-Kokatalysatorgemisch weitgehend ausfällt, die Hauptmenge Katalysator abfiltriert oder abzentrifugiert und dann durch Temperaturerniedrigung das schwerlösliche Urethan, gegebenenfalls zusammen mit geringen Mengen schwerlöslicher Nebenprodukte und restlichem Katalysator, auskristallisiert. Die Mutterlauge, die außer Lösungsmittel, bzw. der als Lösungsmittel angewandten überschüssigen organischen Hydroxyverbindung, noch geringe Mengen Nebenprodukte, gelöstes Urethan und gegebenenfalls gelöste Kokatalysator-Komponenten enthält, kann direkt oder nach vorheriger Entfernung leichtsiedender Nebenprodukte beispielsweise durch Destillation, in die Umsetzung der Nitroverbindungen mit den Hydroxyverbindungen und Kohlenmonoxid zurückgeführt werden, wobei die dem vorherigen Umsatz entsprechende Menge Nitroverbindung und Hydroxyverbindung ergänzt wird. Höhersiedende Nebenprodukte, welche nicht durch Kristallisation entfernt werden, können durch destillative Aufarbeitung eines aliquoten Teiles der Mutterlauge als Destillationsrückstand kontinuierlich aus dem Rückführstrom entfernt werden. Das ausgefallene Rohurethan kann beispielsweise durch Kristallisation aus einem das Urethan bei höheren Temperaturen lösenden, die

Nebenprodukte und die Katalysatorreste jedoch nicht lösenden Lösungsmittel wir beispielsweise Isooktan, Benzol, Toluol, Xylol, Chlorbenzol, Dichlorbenzol rekristallisiert werden. Die bei erhöhter Temperatur unlöslichen Rückstände können durch Oxidation beispielsweise mittels Luftsauerstoff in ein, Metalloxide der den eingesetzten Katalysatoren bzw. Kokatalysatoren entsprechenden Art enthaltendes Gemisch und ein aus den organischen Verunreinigungen resultierenden Abgas, das im wesentlichen aus Kohlendioxid, Sauerstoff, Stickstoff und gegebenenfalls leicht flüchtigen organischen Verunreinigungen besteht, umgewandelt werden. Das Abgas kann je nach Zusammensetzung direkt in die Atmosphäre abgelassen werden oder zusätzlich einer katalytischen Nachverbrennung zugeführt werden, in welcher restliche Verunreinigungen oxidativ entfernt werden. Das aus dem Rückstand erhaltene Metalloxid/Metall-Gemisch das gegebenenfalls noch geringe Mengen des Edelmetalls der 8. Nebengruppe enthalten kann, wird wieder in die Umsetzung der Nitroverbindungen mit Hydroxyverbindungen und Kohlenmonoxid zurückgeführt.

Die kontinuierliche Umsetzung kann in einer Kesselkaskade, einem Rohrbündelreaktor, mehrerer hintereinarder geschalteten Schlaufenreaktoren, in einem oder einer Serie hintereinander geschalteten adiabaten Reaktionsrohren durchgeführt werden. Die Wärmeabführung erfolgt beispielsweise enweder intern durch eingebaute Kühlaggregate, extern über einen Rohrbündelwärmeaustauscher oder adiabatisch über die Wärmekapazität des Reaktionsgemisches mit nachfolgender Abkühlung in externen Kühlaggregaten.

Die weitere Aufarbeitung kann wie oben beschrieben erfolgen, wobei sowohl eine kontinuierliche als auch eine diskontinuierliche Arbeitsweise angewandt werden kann.

Im Falle der bevorzugten Verwendung der erfindungsgemäßen Verfahrensprodukte als Zwischenprodukte zur Herstellung der entsprechenden Isocyanate ist ihre Reindarstellung oft überflüssig. Zur weiteren Verarbeitung kann es vielmehr alsreichend sein, die nach Abfiltrieren des Katalysators und gegebenenfalls Abdestillieren des Lösungsmittels anfallenden Rohprodukte in die Weiterverarbeitung einzusetzen.

Das Verfahren wird durch die folgenden Beispiele illustriert, ohne damit die Erfindung auf die in den Beispielen gegebenen Bedingungen einzuschränken. In den Beispielen 1-7 wurde jeweils Eisenpulver einer mittleren Korngröße von 0,005 mm eingesetzt.

## Beispiele

Die Beispiele 1 bis 5 zeigen die hohe Selektivität und die große Reaktionsgeschwindigkeit der Urethanbildung, welche durch Zugabe von Eisenpulver bewirkt werden.

### Beispiel 1

In einen 0,7 l Autoklaven aus rostfreiem Stahl wurden eine Lösung von 50 g Nitrobenzol in 200 g Ethanol zusammen mit 0,005 g Palladiumchlorid (19 ppm), 10,0 g $\alpha$-$Fe_2O_3$ (3,8 Gew.-%), 3,0 g $FeCl_2 \cdot 4H_2O$ (1,1 Gew.-%), 1,0 g Fe-Pulver (0,4 Gew.-%) und 2,5 g Pyridin (0,9 Gew.-%) eingebracht und 120 bar Kohlenmonoxid bei Raumtemperatur aufgepreßt. Der Autoklaveninhalt wurde auf 180 °C aufgeheizt, wobei sich ein maximaler Druck von 145 bar einstellte, und 2 h bei dieser Temperatur belassen. Der Druck betrug nun 100 bar. Nun wurde auf Raumtemperatur abgekühlt, das Reaktionsgas über eine Kühlfalle entspannt und der flüssige Autoklaveninhalt zusammen mit der in der Kühlfalle abgeschiedenen Flüssigkeit gaschromatographisch analysiert. Der Nitrobenzol-Umsatz betrug 100 %. Die Selektivität an Phenylurethan (O-Ethyl-N-phenylcarbamidsäureester), bezogen auf Nitrobenzol, lag ebenfalls bei 100 %; die effektive Reaktionszeit bis zur Druckkonstanz betrug nur 20 Minuten (ohne Fe-Zusatz : 90 Minuten).

### Beispiel 2

Es wurde wie im Beispiel 1 gearbeitet, jedoch als Kokatalysator 7,3 Gew.-% $\alpha$-$Fe_2O_3$, 0,7 Gew.-% Fe-Pulver und 0,4 Gew.-% Pyridiniumchlorid eingesetzt; Pyridin selbst wurde nicht zugegeben. Auch hier betrug der Nitrobenzolumsatz 100 %; die Selektivität an Phenylurethan, bezogen auf Nitrobenzol, betrug 98 %; die effektive Reaktionszeit bis zur Druckkonstanz betrug nur 60 Minuten (ohne Fe-Zusatz reicht die vorgegebene Reaktionszeit von 2 Stunden zum vollständigen Umsatz nicht aus).

### Beispiel 3

Es wurde wie in Beispiel 1 gearbeitet, jedoch anstelle von Nitrobenzol 2,4-Dinitrotoluol (DNT) zu 6,8 Gew.%, bezogen auf Gesamtgemisch, eingesetzt; Kokatalysator: $\alpha$-$Fe_2O_3$ = 5,6 Gew.-%, $FeCl_2 \cdot 4H_2O$ = 1,1 Gew.-%, Fe-Pulver = 0,8 Gew.-%, Pyridin = 0,9 Gew.-%. Der DNT-Umsatz betrug 100 %; die Selektivität an Bisurethan war — bezogen auf DNT — 90 %; die effektive Reaktionszeit betrug lediglich 20 Minuten.

### Beispiel 4

In einem pyridinfreien Ansatz, der den Bedingungen des Beispiels 1 entspricht, wurden — anstatt der

Kokatalysatorkombination $\alpha$-$Fe_2O_3$/$FeCl_2 \cdot 4H_2O$/Fe — Chrom(III)-oxid ($Cr_2O_3$, 3,8 Gew.-%), Eisen(II)-chloridhydrat ($FeCl_2 \cdot 2H_2O$, 1,1 Gew.-%) und Eisenpulver (Fe, 0,75 Gew.-%) eingesetzt. Man erhielt schon nach ca. 30 Minuten Reaktionszeit bei 180 °C vollständigen Nitrobenzolumsatz und Phenylurethan-Selektivitäten bezogen auf Nitrobenzol bzw. auf eingesetztes Ethanol von jeweils 95 %. Ohne Zusatz von Eisenpulver war nach einer Reaktionszeit von 2 Stunden bei 180 °C nur 80 % des eingesetzten Nitrobenzols umgesetzt und die Phenylurethanselektivität bezogen auf umgesetztes Ethanol nur 83 % (bez. auf umgesetztes Nitrobenzol betrug die Phenylurethan-Selektivität 97 %).

Beispiel 5

In einer Versuchsserie, in der die Konzentrationen der Einsatzstoffe und die Reaktionsbedingungen dem Beispiel 4 entsprechen, wurde das eingesetzte Metalloxid weiter variiert. Es wurden 3,8 Gew.-% $SnO_2$ bzw. $MoO_3$ bzw. $WO_3$ eingesetzt, und es zeigte sich, daß in allen Fällen durch 0,75 Gew.-% Fe-Pulver deutliche Umsatzsteigerungen erzielt wurden :

| Metall-oxid | Nitrobenzol-Umsatz [%] ohne Fe-Pulver | Nitrobenzol-Umsatz [%] mit Fe-Pulver | Selektivität Phenylurethan auf umgesetztes Nitrobenzol | |
|---|---|---|---|---|
| | | | ohne Fe | mit Fe |
| $SnO_2$ | 30 | 100 | 98 | 98 |
| $MoO_3$ | 30 | 40 | 80 | 90 |
| $WO_3$ | 20 | 30 | 86 | 80 |

Die Beispiele 6 und 7 zeigen die korrosionsinhibierende Wirkung des Eisenpulver-Zusatzes.

Beispiel 6

Bei 220 °C und einer Reaktionszeit von 312 h wurde — mit Konzentrationsverhältnissen der Substrate und Katalysatoren wie in Beispiel 1 angeführt — Phenylurethan synthetisiert und dabei Metallproben aus bestimmten Stählen bzw. aus Hastelloy (R) zur Charakterisierung der Korrosion zugegeben.

Es zeigte sich, daß bei bestimmten Stählen (Nr. : 4439, 4465, Awesta-254-SMO (R)) und bei Hastelloy C 4 (R) keine nennenswerte Korrosion auftrat (Korrosionsausmaß : $\leqslant$ 0,02 mm/Jahr), auch war keinerlei Lochfraß zu erkennen.

Ein entsprechender Versuch ohne Zusatz von Eisenpulver erbrachte im Falle der eingesetzten Stahlproben deutliche Korrosion ($\geqslant$ 0,1 mm/a) und Lochfraß.

Beispiel 7

Mit 2,4-Dinitrotoluol wurde bei einer Reaktionstemperatur von 180 °C unter sonst gleichen Bedingungen wie in Beispiel 5 ein Korrosionstest gemacht. Auch hier zeigte es sich, daß der Eisenpulverzusatz sowohl bei Stählen (4439, 4571, 5439) als auch bei Hastelloy C 4 (R) die Korrosion verhindert (Korrosionsausmaß : $\leqslant$ 0,02 mm/Jahr) und auch Lochfraß unterbindet.

**Ansprüche**

1. Verfahren zur Herstellung von Urethanen durch Umsetzung organischer Nitroverbindungen mit Kohlenmonoxid und mindestens eine Hydroxygruppe enthaltenden organischen Verbindungen in der flüssigen Phase bei erhöhter Temperatur und erhöhtem Druck in Gegenwart von Elementen und/oder Elementverbindungen aus der Gruppe der Edelmetalle der 8. Nebengruppe des Periodensystems und einem Kokatalysator, dadurch gekennzeichnet, daß man als Kokatalysator sowohl

a) eine Chloride enthaltende Komponente, welche aus

aa) Eisenoxichlorid oder einem Eisenoxichlorid enthaltenden Gemisch von Eisenverbindungen und/oder

ab) Kombinationen von (i) Oxiden und/oder Oxidhydraten des vierwertigen Zinns, dreiwertigen Chroms, sechswertigen Molybdäns, sechswertigen Wolframs, fünfwertigen Vanadins und/oder zwei- und/oder dreiwertigen Eisens mit (ii) anionisch, als Chlorid gebundenes Chlor enthaltenden Verbindungen von Elementen der 3. bis 5. Hauptgruppe oder 1 bis 8. Nebengruppe des Periodensystems der Elemente, welche mit den Verbindungen der Edelmetalle der 8. Nebengruppe, die als wesentliche

Katalysatorkomponente eingesetzt werden, nicht identisch sind, und/oder Hydrochloriden tertiärer Amine besteht, als auch

b) metallisches Eisen oder dessen Legierungen in fein verteilter bzw. oberflächenreicher Form einsetzt.

2. Verfahren gemäß Anspruch 1, dadurch gekennzeichnet, daß man als Kokatalysatoren-Komponente a) Kombinationen von (i) Oxiden und/oder Oxidhydraten des dreiwertigen Eisens mit (ii) Eisen(II)-chlorid, Eisen(II)-chlorid-Hydraten und/oder Eisen(II)-chlorid-Komplexen verwendet.

3. Verfahren nach Anspruch 1 und 2, dadurch gekennzeichnet, daß man freie tertiäre Amine als zusätzliche Kokatalysator-Komponente mitverwendet.

4. Verfahren nach Anspruch 1 bis 3, dadurch gekennzeichnet, daß man als Nitroverbindung Nitrobenzol oder Dinitrotoluol verwendet.

5. Verfahren nach Anspruch 1 bis 4, dadurch gekennzeichnet, daß man als mindestens eine Hydroxygruppe enthaltende organische Verbindung einen einwertigen aliphatischen Alkohol mit 1 bis 6 Kohlenstoffatomen verwendet.

6. Verfahren nach Anspruch 1 bis 5, dadurch gekennzeichnet, daß man die Umsetzung im Temperaturbereich zwischen 100 °C und 300 °C durchführt.

7. Verfahren nach Anspruch 1 bis 6, dadurch gekennzeichnet, daß man die Umsetzung im Druckbereich von 5 bis 500 bar durchführt.

## Claims

1. A process for the production of urethanes by reacting organic nitro-compounds with carbon monoxide and organic compounds containing at least one hydroxy group in the liquid phase at elevated temperature and elevated pressure in the presence of elements and/or compounds of elements from the group of noble metals of the 8th Secondary Group of the Periodic Table and a co-catalyst, characterised in that the co-catalyst used is formed both by

a) a component containing chlorides which consists of

aa) iron oxychloride or a mixture of iron compounds containing iron oxychloride and/or

ab) combinations of (i) oxides and/or oxide hydrates of tetravalent tin, trivalent chromium, hexavalent molybdenum, hexavalent tungsten, pentavalent vanadium and/or divalent and/or trivalent iron with (ii) compounds containing chlorine anionically-bound as chloride of elements of the 3rd to 5th Main Groups or 1st to 8th Secondary Groups of the Periodic Table of Elements which are not identical with the compounds of the noble metals of the 8th Secondary Group used as main catalyst component, and/or hydrochlorids of tertiary amines and by

b) metallic iron or its alloys in finely divided or high surface form.

2. A process according to Claim 1, characterised in that combinations of (i) oxides and/or oxide hydrates of trivalent iron with (ii) iron (II) chloride, iron (II) chloride hydrates and/or iron (II) chloride complexes are used as co-catalyst component (a).

3. A process according to Claims 1 and 2, characterized in that free tertiary amines are used as additional co-catalyst component.

4. A process according to Claims 1 to 3, characterised in that nitrobenzene or dinitrotoluene is used as the nitro-compound.

5. A process according to Claims 1 to 4, characterised in that a monohydric aliphatic alcohol containing from 1 to 6 carbon atoms is used as the organic compound containing at least one hydroxy group.

6. A process according to Claims 1 to 5, characterised in that the reaction is carried out in the temperature range between 100 °C and 300 °C.

7. A process according to Claims 1 to 6, characterised in that the reaction is carried out in the pressure range of from 5 to 500 bars.

## Revendications

1. Procédé de préparation des uréthannes par réaction de composés organiques nitrés avec l'oxyde de carbone et des composés organiques contenant au moins un groupe hydroxy en phase liquide, à température élevée et pression élevée, en présence d'éléments et/ou de composés d'éléments du groupe des métaux nobles du 8$^{e}$ sous-groupe de la Classification Périodique et d'un co-catalyseur, caractérisé en ce que l'on utilise en tant que co-catalyseur, à la fois

a) un composant contenant des chlorures, qui consiste en

aa) de l'oxychlorure de fer ou un mélange de composés du fer contenant de l'oxychlorure de fer, et/ou

ab) des combinaisons de (i) des oxydes et/ou oxydes hydratés de l'étain tétravalent, du chrome trivalent, du molybdène hexavalent, du tungstène hexavalent, du vanadium pentavalent et/ou du fer di- et/ou trivalent avec (ii) des composés contenant du chlore anionique, combiné à l'état de chlorure, des

éléments du 3e au 5e groupe principal ou du 1er au 8e sous-groupe de la Classification Périodique des Eléments, non identiques aux composés des métaux précieux du 8e sous-groupe utilisés en tant que composant essentiel de catalyseur, et/ou des chlorhydrates d'amines tertiaires

b) du fer métallique ou ses alliages à l'état de fine division ou à grande surface.

2. Procédé selon la revendication 1, caractérisé en ce que l'on utilise en tant que composant de co-catalyseur a) des combinaisons de (i) des oxydes et/ou oxydes hydratés du fer trivalent avec (ii) du chlorure de fer-II, des hydrates du chlorure de fer-II et/ou des complexes du chlorure de fer-II.

3. Procédé selon les revendications 1 et 2, caractérisé en ce que l'on utilise conjointement des amines tertiaires libres en tant que composant additionnel de co-catalyseur.

4. Procédé selon les revendications 1 à 3, caractérisé en ce que l'on utilise en tant que composé nitré le nitrobenzène ou le dinitrotoluène.

5. Procédé selon les revendications 1 à 4, caractérisé en ce que l'on utilise en tant que composé organique contenant au moins un groupe hydroxy un alcool aliphatique monovalent contenant de 1 à 6 atomes de carbone.

6. Procédé selon les revendications 1 à 5, caractérisé en ce que l'on effectue la réaction dans l'intervalle de température de 100 à 300 °C.

7. Procédé selon les revendications 1 à 6, caractérisé en ce que l'on effectue la réaction dans l'intervalle de pression de 5 à 500 bar.